# EUROPEAN PATENT APPLICATION

(11) **EP 2 717 366 A1**
(43) Date of publication of application: **09.04.2014**
(21) Application number: 11866733.6
(22) Date of filing: 02.06.2011
(51) Int. Cl.: H01M 4/62, H01M 4/02

(54) **HIGH CAPACITANCE LITHIUM ION BATTERY CONTAINING METALLIC CONDUCTING MATERIALS**

(71) Applicant: Shihlien Apex China Holding Co., Limited, Hong Kong (CN)
(72) Inventor: ZHANG, Guiping, Shenzhen Guangdong 518053 (CN); PAN,Jiemin, Shenzhen,Guangdong 518000 (CN)
(74) Representative: Lantos, Mihaly
(86) International application number: PCT/CN2011/075198
(87) International publication number: WO 2012/162893

(57) **Abstract**

A lithium ion battery containing conducting materials comprises a positive electrode, a negative electrode, a separator, an electrolyte, adhesives and sealing materials. The conducting materials in the positive electrode comprise metal carbides, metal borides or metal nitrides. The conducting materials in the negative electrode comprise metal carbides, metal borides or metal nitrides. The metal carbide is titanium carbonitride, tungsten carbide or titanium carbide, vanadium carbide, tantalum carbide, and eutectic of tungsten carbide and titanium carbide. The metal boride is molybdenum boride, tungsten boride or vanadium boride. The metal nitride is titanium nitride, tungsten nitride or tantalum nitride. The conducting materials in the positive electrode may also comprise powdered metals. The conducting materials in the negative electrode comprise powdered metals. The powdered metal is nickel powder, copper powder or chromium powder.

## Description

### Field of the Invention

The present invention relates to a battery, in particular to a high capacity lithium ion battery containing metallic conducting materials.

### Background to the Invention

A chemical battery, an apparatus directly converting chemical energy into electric energy, mainly includes a shell as a sealing material, an electrolyte solution inside the shell, positive and negative electrode plates, and lead connecting electrodes, wherein the positive and negative electrode plates and the lead are immersed in the solution. A rechargeable chemical battery further includes a circuit board configured to perform charging operation, whereas, the abovementioned electrolyte solution, the positive and negative electrode plates and the like are collectively referred to as a battery cell. The existing lithium ion battery is one of the chemical batteries and has been widely applied at present. The positive electrode plate and the negative electrode plate in the lithium ion battery respectively include an active material, a conductive agent, a current collector and an adhesive. At present, it is general to employ conducting carbon black (or carbon nanofibers, carbon nanotubes, acetylene black and other non-metallic conducting materials) as the conductive agent in the positive electrode plate or the negative electrode plate of the commercial lithium ion battery, which is mainly because the positive electrode active materials (such as lithium cobaltate, lithium nickel cobaltate, lithium manganate, manganese dioxide and lithium thionyl chloride) per se are poor in electric conductivity and need to absorb electrons when outputting electric energy outwards, the electrons reach the current collector which outputs the electric energy outwards, whereas, the conducting carbon black has the effect of transferring the electrons released by the current collector to the active materials, thereby playing the role of electron conduction inside the battery cell, for a secondary lithium ion battery, during charging, the conducting carbon black plays the role of transferring the electrons from the current collector to the positive electrode active materials, if no conductive agent is added, the internal resistance of the battery is high, the electrons released by the active materials may not be transferred to the current collector, thus, the electric performances (such as capacity) of the battery may not be exerted, or charging is unavailable, and the battery may not be used commercially. If no conductive agent is added to the negative electrode plate, the high-rate discharge of the battery will be affected, and accordingly, the conducting carbon black (or carbon nanofibers, carbon nanotubes, acetylene black and other non-metallic conducting materials) plays a crucial role in the lithium ion battery.

However, since SONY company has successfully realized the commercial production of the lithium ion rechargeable battery (also known as secondary battery) in 1990s, at present, there are lithium ion batteries under mass production, which are applied to, such as, cell phones, notebook computers, MP3, MP4 and other consumer electronics and can better meet the requirements on electric performance of electronic products with quite mature technology, due to the advantage of high energy density, properties such as lightness, thinness and high energy density also gain great popularity and attention, along with the development of times, in some fields where the lithium ion batteries haven't been employed, however, the existing commercial lithium ion battery technology may not meet the requirements of products in new fields, such as in the aviation field, where there will be high-altitude low temperature of -40 °C, demanding higher working current and high safety as well as light weight (high energy density), another example, in the northern region of Europe, electric macrocycles are very popular, but it is difficult for the lithium ion batteries to be subject to charging as well as high-efficiency work, with long cyclic life, at -20 °C. Another example, for bullet-proof clothing or combat uniforms, the lithium ion batteries are required to work at low temperature and bear bullet penetration (i.e., requirement on high safety), and furthermore, demand higher working current, light weight (high energy density), etc. To this end, it is still urgent to further improve energy density and low-temperature discharge efficiency in fields such as aviation, consumer electronics, and new electric energy.

However, the conducting materials in electrodes of the lithium ion battery at present are conducting carbon black, carbon nanofibers, carbon nanotubes, acetylene black and other non-metallic conducting materials, which have the resistivity being 4×10⁻⁶ Ωm -7×10⁻⁶ Ωm and poor oxidation resistance and are inflammable in an aerobic environment.

### Summary of the Invention

The present invention is devised to solve the technical problem on providing a lithium ion battery with high capacity and capacity density, high discharge platform, high low-temperature discharge efficiency, and in particular, high safety.

In order to solve the technical problem described above, the technical solution employed by the present invention for solving the technical problem thereof is as follows: a high capacity lithium ion battery containing metallic conducting materials is provided, comprising a positive electrode plate, a negative electrode plate, a separator, an electrolyte, adhesives and sealing materials, wherein the conducting materials in the positive electrode plate comprise metal carbides, metal borides or metal nitrides, and the conducting materials in the negative electrode plate comprise metal carbides, metal borides or metal nitrides; and
the metal carbide is titanium carbonitride, vanadium carbide, tantalum carbide, eutectic of tungsten carbide and titanium carbide, tungsten carbide or titanium carbide, the metal boride is molybdenum boride, tungsten boride or vanadium boride, and the metal nitride is titanium nitride, tungsten nitride or tantalum nitride.

In order to solve the technical problem described above, another technical solution employed by the present invention is as follows: a high capacity lithium ion battery containing metallic conducting materials is provided, comprising a positive electrode plate, a negative electrode plate, a separator, an electrolyte, adhesives and sealing materials, wherein the conducting materials in the positive electrode plate comprise powdered metals, and the conducting materials in the negative electrode plate comprise powdered metals; and
the powdered metal is nickel powder, copper powder or chromium powder.

Wherein the positive electrode plate comprises a positive electrode active material, a positive electrode current collector and an adhesive, the positive electrode active material is lithium iron phosphate, lithium cobaltate, lithium manganate, lithium nickel-cobalt-manganese oxide, lithium manganese phosphate, lithium manganese iron phosphate, lithium manganese silicate, manganese dioxide, or lithium thionyl chloride, the positive electrode current collector is an aluminum foil, and the adhesive is gum arabic, modified polyoxyethylene, polyvinylidene fluoride, styrene butadiene rubber latex or carboxymethyl cellulose; and
the negative electrode plate comprises a negative electrode active material, a negative electrode current collector and an adhesive, the negative electrode active material is artificial graphite, natural graphite, mixture of artificial graphite and natural graphite, mesocarbon microbeads, metallic lithium, metallic tin, silicon or lithium titanate.

Wherein the separator is a three-layer composite microporous separator including polypropylene, polyethylene and polypropylene, a monolayer polyethylene microporous separator or a polyphthalimide microporous separator.

Wherein the adhesive is gum arabic, modified polyoxyethylene, polyvinylidene fluoride, styrene butadiene rubber latex or carboxymethyl cellulose.

Wherein the electrolyte comprises a solvent, a soluble lithium salt and an additive, the solvent is ethyene catrbonate, ethyl methyl carbonate, propylene carbonate, dimethyl carbonate, diethyl carbonate, methyl propyl carbonate or ethyl acetate, the soluble lithium salt is lithium hexafluorophosphate, lithium dodecafluorofluoroborate, lithium bis(oxalato)borate or lithium imide salt, and the additive is propyl sultone, vinylene carbonate, vinylethylene carbonate, fluorinated carbonate, ethylene sulfite, hexamethyldisilazane or triphenyl phosphite.

Wherein the sealing material is self-antiflaming rigid polyvinyl chloride plastics, stainless steel or aluminum-plastic composite film or an aluminum shell.

Wherein the conducting materials in the positive electrode plate contain the irradiation crosslinking mixture of metallic conducting materials and polyethylene, and the conducting materials in the negative electrode plate contain the irradiation crosslinking mixture of metallic conducting materials and polyethylene.

The present invention has the beneficial effects that the metal carbide, the metal boride, or the metal nitride and the powdered metal have the resistivity being about 5×10⁻⁷ Ωm -5×10⁻⁹ Ωm and the thermal stability temperature being about 3100 °C, the metal carbide, the metal boride, or the metal nitride has better chemical stability (resistance to corrosion as well as acid and alkali) and better oxidation resistance, and is nonflammable in the aerobic environment; and with regard to the lithium ion battery provided by the present invention, the metallic conducting materials are added into the positive electrode plate and (or) the negative electrode plate thereof to completely or partially substitute original non-metallic conducting materials in the positive electrode plate and (or) the negative electrode plate in the lithium ion battery, thereby further improving the capacity and capacity density as well as the low-temperature discharge efficiency of the lithium ion battery, and the safety is further improved. The metallic conducting material is lower in resistivity so that the internal resistance of the battery is reduced, and when the battery is discharged to certain potential (voltage, such as 2.8 V or 3.0 V), the discharge time of the battery is longer, thereby improving the capacity and capacity density of the lithium ion battery. As the metallic conducting material is nonflammable, the safety of the battery is improved.

### Detailed Description of Working Embodiments

In order to describe the technical contents, structure features, obtained objects and effects of the present invention in detail, the present invention will be described in conjunction with embodiments below.

In the present invention, the powdered metal carbide (such as titanium carbonitride, tungsten carbide and titanium carbide), the powdered metal boride (such as molybdenum boride, tungsten boride and vanadium boride), or the powdered metal nitride (such as titanium nitride, tungsten nitride and tantalum nitride) and the powdered metal (such as nickel powder, copper powder and chromium powder) are referred to as "metallic conducting material" for short, in the meantime, the conducting carbon black (or carbon nanofibers, carbon nanotubes, acetylene black and the like) is herein referred to as "non-metallic conducting material" for short. The particle size of the metallic conducting material is ranges from 1 nanometer to 9999 micrometers, and even larger.

The metal carbide is not limited to titanium carbonitride, tungsten carbide or titanium carbide, other metal carbides, such as vanadium carbide, tantalum carbide, and eutectic of tungsten carbide and titanium carbide, are also included in claims of the present invention, the metal boride is not limited to molybdenum boride, tungsten boride or vanadium boride, and the metal nitride is not limited to titanium nitride, tungsten nitride or tantalum nitride.

### Embodiment 1

With regard to the high capacity lithium ion battery containing metallic conducting materials according to the present invention, in Embodiment 1, a positive electrode plate, a negative electrode plate and a separator are used to manufacture a polymer lithium ion secondary battery of 500 mAh via a winding structure, the battery has the dimensions of 5.0*303*48 mm³ and takes lithium cobaltate as the positive electrode active material, titanium carbide as the positive electrode conductive agent, and the polyvinylidene fluoride (PVDF) as the positive electrode adhesive, the proportion of components in the positive electrode is as follows: lithium cobaltate/titanium carbide/polyvinylidene fluoride is 92.58/7.92/1.7 in parts (by weight), the measured compaction density of the titanium carbide is 3.6 times that of the conducting carbon black, the electric conductivity of the metallic conducting material is superior to that of the non-metallic conducting material, the conductive agent may be replaced as long as based on the same volume fraction, therefore, when the metallic conducting material is used to substitute the non-metallic conducting material, as the compaction density of the metallic conducting material is 3.6 times that of the non-metallic conducting material and the addition ratio of the original non-metallic conducting material is 2.2 parts, the titanium carbide in the present embodiment is 7.92 parts in terms of weight fraction, accordingly. The positive electrode current collector is an aluminum foil.

The negative electrode active material is mesocarbon microbeads, the negative electrode conductive agent is conducting carbon SUPER P, the adhesive is styrene butadiene rubber (SBR) latex and carboxymethyl cellulose (CMC), the proportion of components in the negative electrode is as follows: mesocarbon microbeads/conducting carbon SUPER P/SBR latex/CMC is 94.2/2.0/2.0/1.8 in parts (by weight), the negative electrode current collector is a coper foil, and water is taken as the solvent of the negative electrode adhesive.

The separator of the battery is a three-layer (polypropylene/polyethylene/polypropylene) composite microporous separator, and the electrolyte of the battery consists of a solvent selected from ethyene catrbonate (EC), ethyl methyl carbonate (EMC), propylene carbonate (PC), dimethyl carbonate (DMC), diethyl carbonate (DEC), methyl propyl carbonate (MPC), ethyl acetate and the like, a lithium salt (i.e. lithium hexafluorophosphate), and an additive selected from propyl sultone, vinylene carbonate (VC), vinylethylene carbonate (VEC), ethylene sulfite, aminosilanes and other substances. The sealing materials (shell and battery shell caps) of the battery are self-antiflaming rigid polyvinyl chloride.

### Embodiment 2

The present embodiment makes improvements based on Embodiment 1, wherein the proportion, in Embodiment 1, that lithium cobaltate/titanium carbide/polyvinylidene fluoride is 92.58/7.92/1.7 in parts (by weight) is changed into the proportion that lithium cobaltate/titanium carbide/carbon black SUPER P/polyvinylidene fluoride is 92.98/4.32/1.0/1.7 in parts (by weight), otherwise unchanged.

### Embodiment 3

The present embodiment makes improvements based on Embodiment 1, wherein the titanium carbide in Embodiment 1 is changed into titanium carbonitride, otherwise unchanged.

### Embodiment 4

The present embodiment makes improvements based on Embodiment 2, wherein the titanium carbide in Embodiment 2 is changed into titanium carbonitride, otherwise unchanged.

### Embodiment 5

The present embodiment makes improvements based on Embodiment 1, wherein the titanium carbide in Embodiment 1 is changed into nickel powder, otherwise unchanged.

### Embodiment 6

The present embodiment makes improvements based on Embodiment 2, wherein the titanium carbide in Embodiment 2 is changed into nickel powder, otherwise unchanged.

### Embodiment 7

The present embodiment makes improvements based on Embodiment 1, wherein the titanium carbide in Embodiment 1 is changed into tungsten carbide, otherwise unchanged.

### Embodiment 8

The present embodiment makes improvements based on Embodiment 2, wherein the titanium carbide in Embodiment 2 is changed into tungsten carbide, otherwise unchanged.

### Embodiment 9

The present embodiment makes improvements based on Embodiment 1, wherein the titanium carbide in Embodiment 1 is changed into vanadium boride, otherwise unchanged.

### Embodiment 10

The present embodiment makes improvements based on Embodiment 2, wherein the titanium carbide in Embodiment 2 is changed into vanadium boride, otherwise unchanged.

### Embodiment 11

The present embodiment makes improvements based on Embodiment 1, wherein the conducting carbon SUPER P serving as the negative electrode conductive agent in Embodiment 1 is changed into titanium carbide, otherwise unchanged.

### Embodiment 12

The present embodiment makes improvements based on Embodiment 2, wherein the conducting carbon SUPER P serving as the negative electrode conductive agent in Embodiment 2 is changed into titanium carbide, otherwise unchanged

### Embodiment 13

The present embodiment makes improvements based on Embodiment 1, wherein the lithium cobaltate in Embodiment 1 is changed into lithium iron phosphate, otherwise unchanged.

### Embodiment 14

The present embodiment makes improvements based on Embodiment 2, wherein the lithium cobaltate in Embodiment 2 is changed into lithium iron phosphate, otherwise unchanged.

### Embodiment 15

The present embodiment makes improvements based on Embodiment 1, wherein manufacturing the polymer lithium ion secondary battery of 500 mAh, in Embodiment 1, is changed into manufacturing the polymer lithium ion secondary battery of 3000 mAh, with the dimensions being 5.5*53*106 mm³, and the titanium carbide in the positive electrode conductive agent is changed into a mixture of titanium carbide and high-density polyethylene in terms of the weight ratio being 80/10, wherein a method for mixing the titanium carbide and the high-density polyethylene comprises: carrying out melting mixing on the titanium carbide and the high-density polyethylene at high temperature (160 °C) by using an internal mixer of a twin screw machine, after cooling, grinding an obtained mixture by using a grinder, sieving the mixture through a sieve of 300 meshes or more to obtain the powdered mixture of the titanium carbide and the high-density polyethylene, and then, carrying out irradiation crosslinking by employing an irradiation method in which cobalt 60 or electron rays is/are employed to irradiate the powdered mixture, thereby obtaining the conductive agent, i.e., the powdered mixture of the titanium carbide and the high-density polyethylene, otherwise unchanged.

### Embodiment 16

The present embodiment makes improvements based on Embodiment 2, wherein manufacturing the polymer lithium ion secondary battery of 500 mAh, in Embodiment 2, is changed into manufacturing the polymer lithium ion secondary battery of 3000 mAh, with the dimensions being 5.5*53*106 mm³, and the titanium carbide in the positive electrode conductive agent is changed into a mixture of the titanium carbide and high-density polyethylene in terms of the weight ratio being 80/10, wherein a method for mixing the titanium carbide and the high-density polyethylene comprises: carrying out melting mixing on the titanium carbide and the high-density polyethylene at high temperature (160 °C) by using an internal mixer of a twin screw machine, after cooling, grinding an obtained mixture by using a grinder, sieving the mixture through a sieve of 300 meshes or more to obtain the mixture of the titanium carbide and the high-density polyethylene, and then, carrying out irradiation crosslinking by employing an irradiation method in which cobalt 60 or electron rays is/are employed to irradiate the mixture, thereby obtaining the conductive agent, i.e., the powdered mixture of the titanium carbide and the high-density polyethylene, otherwise unchanged.

### Embodiment 17

The present embodiment makes improvements based on Embodiment 1, wherein manufacturing the polymer lithium ion secondary battery of 500 mAh, in Embodiment 1, is changed into manufacturing the polymer lithium ion secondary battery of 3000 mAh, with the dimensions being 5.5*53*106 mm³, and the titanium carbide in the positive electrode conductive agent is changed into a mixture of the titanium carbide and nylon 6 in terms of the weight ratio being 80/10, wherein a method for mixing the titanium carbide and the nylon 6 comprises: carrying out melting mixing on the titanium carbide and the nylon 6 at high temperature (220 °C) by using an internal mixer or a twin screw machine, after cooling, grinding an obtained mixture by using a grinder, sieving the mixture through a sieve of 300 meshes or more to obtain the mixture of the titanium carbide and the nylon 6, and then, carrying out irradiation crosslinking by employing an irradiation method in which cobalt 60 or electron rays is/are employed to irradiate the mixture, thereby obtaining the conductive agent, i.e., the powdered mixture of the titanium carbide and the nylon 6, otherwise unchanged.

### Embodiment 18

The present embodiment makes improvements based on Embodiment 2, wherein manufacturing the polymer lithium ion secondary battery of 500 mAh, in Embodiment 2, is changed into manufacturing the polymer lithium ion secondary battery of 3000 mAh, with the dimensions being 5.5*53*106 mm³, and the titanium carbide in the positive conductive agent is changed into a mixture of the titanium carbide and nylon 6 in terms of the weight ratio being 80/10, wherein a method for mixing the titanium carbide and the nylon 6 comprises: carrying out melting mixing on the titanium carbide and the nylon 6 at high temperature (220 °C) by using an internal mixer or a twin screw machine, after cooling, grinding an obtained mixture by using a grinder, sieving the mixture through a sieve of 300 meshes or more to obtain the mixture of the titanium carbide and the nylon 6, and then, carrying out irradiation crosslinking by employing an irradiation method in which cobalt 60 or electron rays is/are employed to irradiate the mixture, thereby obtaining the conductive agent, i.e., the powdered mixture of the titanium carbide and the nylon 6, otherwise unchanged.

### Embodiment 19

With regard to the high capacity lithium ion battery containing metallic conducting materials according to the present invention, in Embodiment 19, a cylindrical AA-type lithium manganese dioxide primary battery of 1300 mAh is manufactured with the dimensions being 50 mm (height)*14.5 mm (diameter), and takes manganese dioxide as the positive electrode active material, titanium carbide as the positive electrode conductive agent, polyvinylidene fluoride emulsion as the positive electrode adhesive, a nickel mesh as the positive electrode current collector, a pure lithium foil as the negative electrode active material, a nickel strip as the negative electrode current collector, a glass fiber cloth as the separator, and a mixture, which is obtained by dissolving lithium perchlorate in a mixture solvent of propylene carbonate and ethyl methyl carbonate and has the molar concentration being 1, as the electrolyte.

### Embodiment 20

With regard to the high capacity lithium ion battery containing metallic conducting materials according to the present invention, in Embodiment 20, a square lithium thionyl chloride primary battery of 1500 mAh is manufactured with the dimensions being 9*36*55 mm³, and takes thionyl chloride as the positive electrode active material, titanium carbide as the positive electrode conductive agent, polyvinylidene fluoride emulsion as the positive electrode adhesive, a nickel mesh as the positive electrode current collector, a pure lithium foil as the negative electrode active material, a nickel strip as the negative electrode current collector, a glass fiber cloth as the separator, and a mixture, which is obtained by dissolving lithium perchlorate in thionyl chloride and has the molar concentration being 1, as the electrolyte.

Comparative Embodiment 1: the proportion, in Embodiment 1, that lithium cobaltate/titanium carbide/polyvinylidene fluoride is 92.58/7.92/1.7 in parts (by weight) is changed into the proportion that lithium cobaltate/titanium carbide/carbon black SUPER P/polyvinylidene fluoride is 95.1/2.2/1.0/1.7 in parts (by weight), otherwise unchanged.

Comparative Embodiment 2: the same as Comparative Embodiment 1.

Comparative Embodiment 3: the same as Comparative Embodiment 1.

Comparative Embodiment 4: the same as Comparative Embodiment 1.

Comparative Embodiment 6: the titanium carbide as the positive electrode conductive agent in Embodiment 19 is changed into acetylene black, otherwise the same as Embodiment 19.

Comparative Embodiment 7: the titanium carbide as the positive electrode conductive agent in Embodiment 20 is changed into acetylene black, otherwise the same as Embodiment 19.

According to the present invention, the method for irradiation crosslinkng and mixing of the metallic conducting materials and polyethylene or nylon and other plastics comprises: carrying out melting mixing on the metallic conducting materials and the polyethylene at high temperature (150 °C-180 °C) by using an open mill, a rhemometer, an internal mixer or a twin screw machine, after cooling, grinding an obtained mixture by using a grinder, then sieving the mixture through a sieve of 20 to 1000 meshes to obtain the mixture of the metallic conducting materials and the polyethylene, and then carrying out irradiation crosslinking by employing an irradiation method in which cobalt 60 or electron rays and other rays is/are used to irradiate the mixture, thereby obtaining the powdered conductive agent, namely, the mixture of the metallic conducting materials and the polyethylene.

The weight ratio of the metallic conducting materials to the polyethylene in the mixture is 1/99 to 99/1.

The battery provided by the present invention is subject to safety test methods (in accordance with related standards at home and abroad) as follows:
Overcharge test: charge a test battery by using a power supply, not smaller than 10 V, at 0.5 C current until the capacity of the test battery reaches 250% of the rated capacity;
Nail penetration test: fix a fully charged test battery on a fixture, and forcibly penetrate the test battery along a radial direction by using a steel nail having the diameter of 3 mm;
crush test: place a test battery on a plane, crossly place a stick having the diameter of 15.8 mm on a central surface of the test sample (i.e., the test battery), and drop a weight of 9.1 ± 0.46 kg to the test sample from the height of 61 ± 2.5 mm. When a cylindrical or square battery is impacted, the long axis thereof shall be parallel to the plane and vertical to a curved surface of the stick having the diameter of 15.8 mm, which is placed on the center of the test sample. The square battery shall rotate for 90 degrees along a direction of the long axis, thereby enabling a wide side and a narrow side to bear the impact. Each sample battery only bears the impact in one direction, and an independent test sample is adopted in each test;
hot impact test: place a test battery in a natural convection or forced convection oven to be heated, wherein the temperature of the oven rises to 130 °C at the speed of 5 ± 2 °C/min, and the temperature rise is stopped after the temperature is maintained for 10 min; and
weight impact test: place a test battery on a plane, crossly place a stick having the diameter of 15.8 mm on a central surface of the test sample (i.e., the test battery), and drop a weight of 9.1 ± 0.46 kg to the test sample from the height of 61 ± 2.5 mm. When a cylindrical or square battery is impacted, the long axis thereof shall be parallel to the plane and vertical to a curved surface of the stick having the diameter of 15.8 mm, which is placed on the center of the test sample. The square battery shall rotate for 90 degrees along a direction of the long axis, thereby enabling a wide side and a narrow side to bear the impact. Each sample battery only bears the impact in one direction, and an independent test sample is adopted in each test.

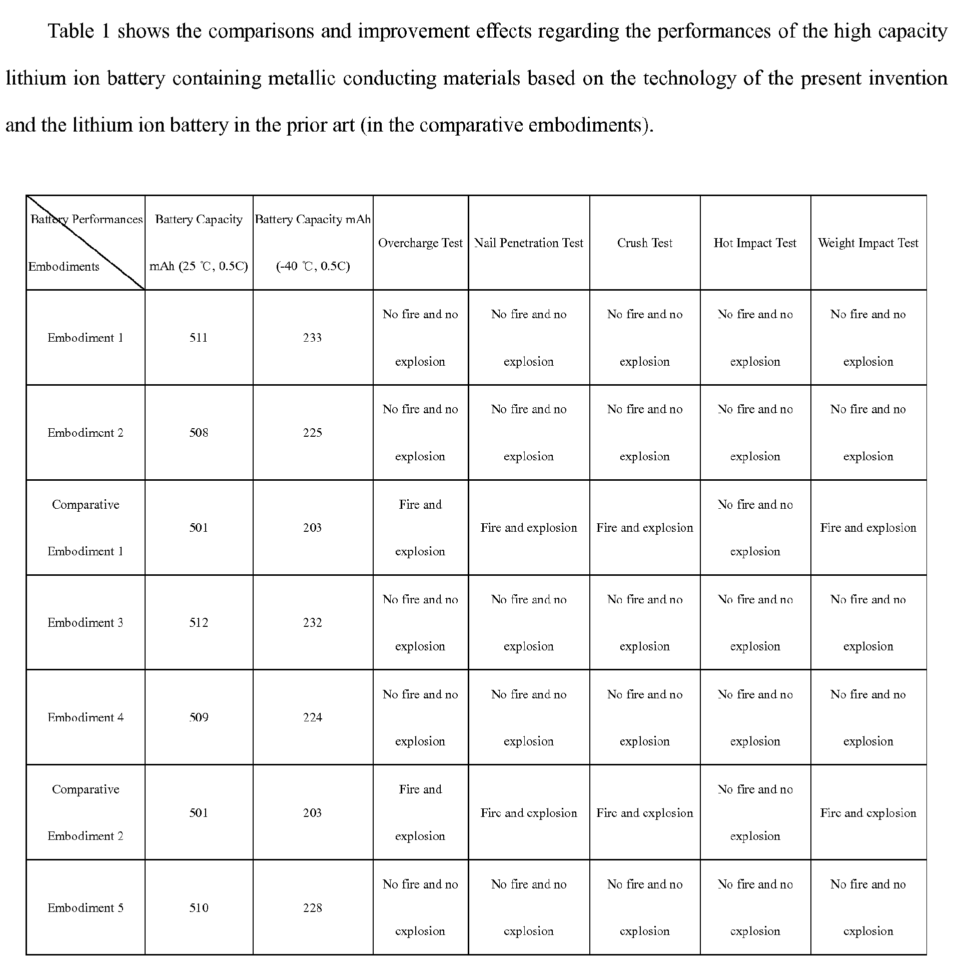

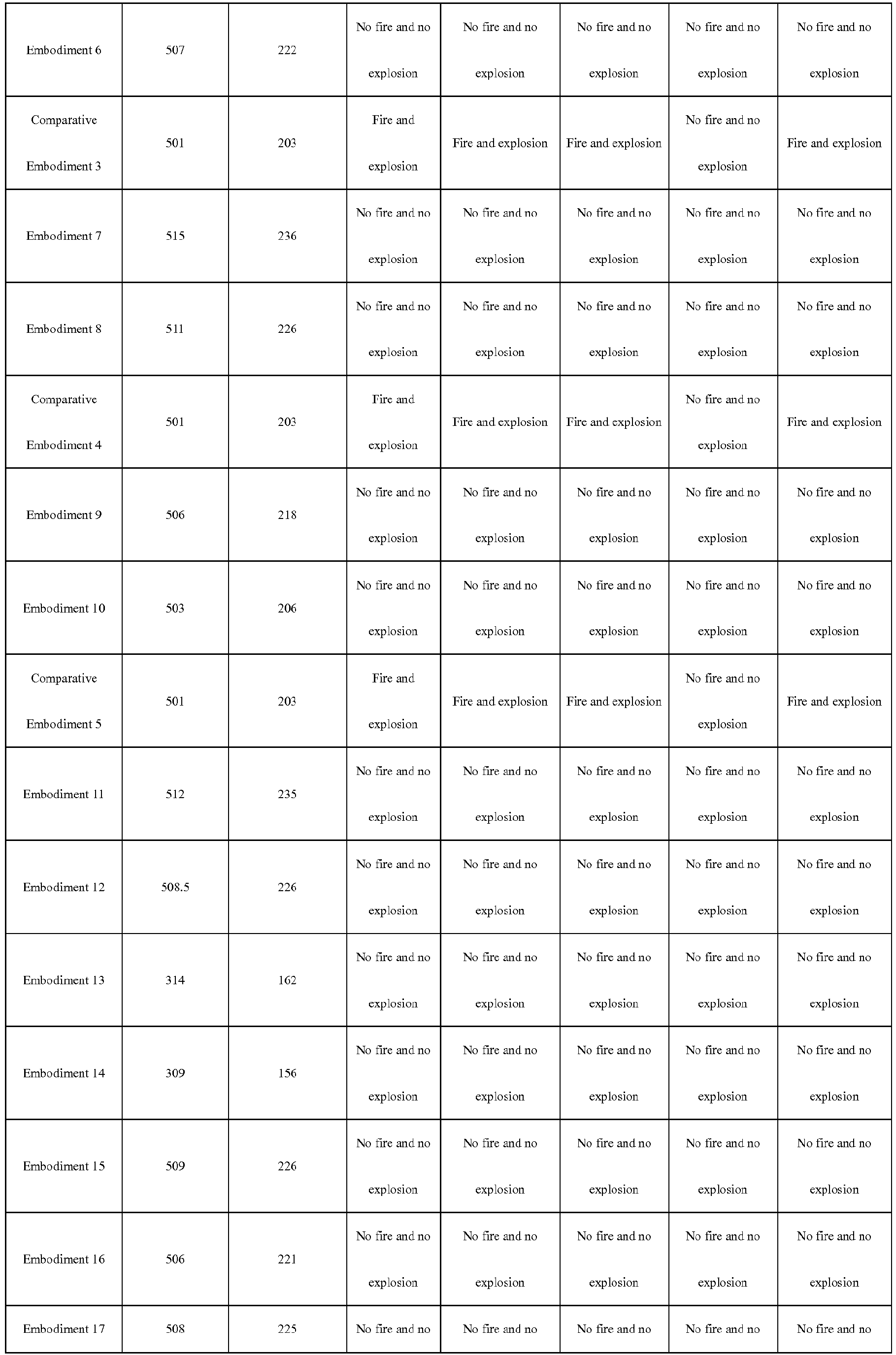

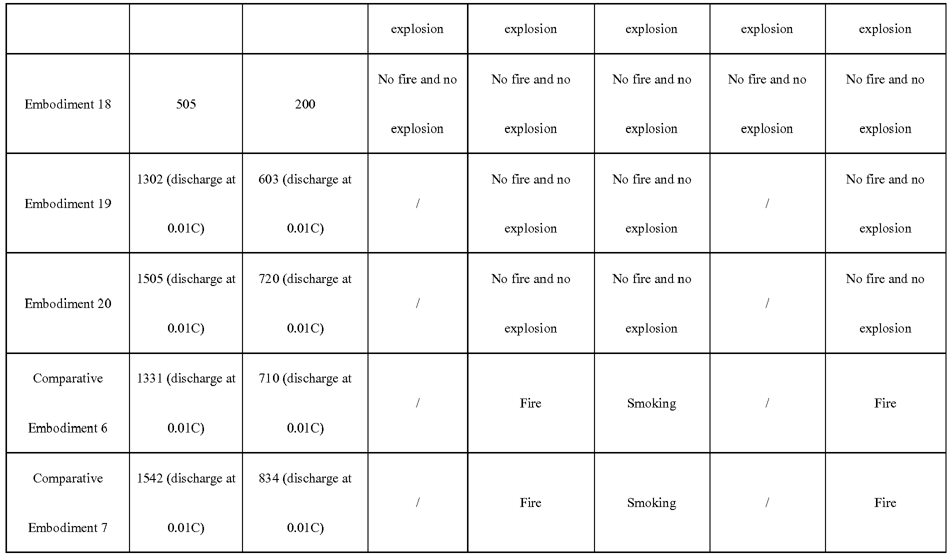

Upon comparisons in Table 1, it can be seen that for the lithium battery manufactured based on the prior art (i.e. the comparative embodiments) and employing a non-metallic conductive agent, during safety tests, such as the overcharge test, the nail penetration test and the weight impact test, the battery is subject to phenomena such as fire, explosion or smoking, whereas, for the high capacity lithium ion battery containing metallic conducting materials based on the technology of the present invention (i.e. the embodiments, in which the metallic conductive agent is employed), during the safety tests, such as the overcharge test, the nail penetration test and the weight impact test, the battery is not subject to phenomena such as fire and explosion, which indicates, upon comparisons, that the defect that the battery is unsafe in the prior art may be overcome by employing the metallic conductive agent based on the technology of the present invention.

Upon comparisons in Table 1, it can further be seen that the capacity of the lithium ion battery (i.e. the embodiments, in which the metallic conducting agent is employed) based on the technology of the present invention is higher than that of the lithium battery (i.e. comparative embodiments, in which the non-metallic conductive agent is employed) manufactured based on the prior art, which indicates, upon comparisons, that the technology of the present invention, in which the metallic conductive agent is employed, may improve the capacity of the battery in the prior art (i.e. the comparative embodiments, in which the non-metallic conductive agent is employed).

In more embodiments, the mesocarbon microbeads in the negative electrode active material may be changed into black lead like materials, such as artificial graphite (such as petroleum coke, high purity graphite, needle coke, G4 material, and carbon fibers), natural graphite (such as coated natural graphite), and mixture of artificial graphite and natural graphite, or changed into lithium titanate.

Alternatively, the self-antiflaming rigid polyvinyl chloride plastics as the sealing materials of the battery (shell and battery shell caps) is replaced with stainless steel, or changed into an aluminum-plastic composite film or an aluminum shell material, otherwise unchanged.

According to the embodiments described above and improvements thereof, respective improvement solutions may be flexibly adjusted in collocation, as required.

The above description only relates to the embodiments of the present invention, but not therefore construed as limitations on the scope of the present invention, and any equivalent structures or equivalent flow alternations made to the specification of the present invention, or direct or indirect application to other related technical fields shall likewise fall within the scope of patent protection of the present invention.

## Claims

1. A high capacity lithium ion battery containing metallic conducting materials, comprising a positive electrode plate, a negative electrode plate, a separator, an electrolyte, adhesives and sealing materials, wherein the conducting materials in the positive electrode plate comprise metal carbides, metal borides or metal nitrides, and the conducting materials in the negative electrode plate comprise metal carbides, metal borides or metal nitrides; and
The metal carbide is titanium carbonitride, vanadium carbide, tantalum carbide, eutectic of tungsten carbide and titanium carbide, tungsten carbide or titanium carbide, the metal boride is molybdenum boride, tungsten boride or vanadium boride, and the metal nitride is titanium nitride, tungsten nitride or tantalum nitride.

2. A high capacity lithium ion battery containing metallic conducting materials, comprising a positive electrode plate, a negative electrode plate, a separator, an electrolyte, adhesives and sealing materials, wherein the conducting materials in the positive electrode plate comprise powdered metals, and the conducting materials in the negative electrode plate comprise powdered metals; and
The powdered metal is nickel powder, copper powder or chromium powder.

3. The high capacity lithium ion battery containing metallic conducting materials according to Claim 1 or 2, wherein the positive electrode plate comprises a positive electrode active material, a positive electrode current collector and an adhesive, the positive electrode active material is lithium ion phosphate, lithium cobaltate, lithium manganate, lithium nickel-cobalt-manganese oxide, lithium manganese phosphate, lithium manganese iron phosphate, lithium manganese silicate, manganese dioxide or lithium thionyl chloride, the positive electrode current collector is an aluminum foil, and the adhesive is gum arabic, modified polyoxyethylene, polyvinylidene fluoride, styrene butadiene rubber latex or carboxymethyl cellulose; and
The negative electrode plate comprises a negative electrode active material, a negative electrode current collector and an adhesive, the negative electrode active material is artificial graphite, natural graphite, mixture of artificial graphite and natural graphite, mesocarbon microbeads, metallic lithium, metallic tin, silicon or lithium titanate.

4. The high capacity lithium ion battery containing metallic conducting materials according to any one of Claim 1 or 2, wherein the separator is a three-layer composite microporous separator including polypropylene, polyethylene and polypropylene, a monolayer polyethylene microporous separator or a polyphthalimide microporous separator.

5. The high capacity lithium ion battery containing metallic conducting materials according to any one of Claim 1 or 2, wherein the adhesive is gum arabic, modified polyoxyethylene, polyvinylidene fluoride, styrene butadiene rubber latex or carboxymethyl cellulose.

6. The high capacity lithium ion battery containing metallic conducting materials according to any one of Claim 1 or 2, wherein the electrolyte comprises a solvent, a soluble lithium salt and an additive, the solvent is ethyene catrbonate, ethyl methyl carbonate, propylene carbonate, dimethyl carbonate, diethyl carbonate, methyl propyl carbonate or ethyl acetate, the soluble lithium salt is lithium hexafluorophosphate, lithium dodecafluorofluoroborate, lithium bis(oxalato)borate or lithium imide salt, and the additive is propyl sultone, vinylene carbonate, vinylethylene carbonate, fluorinated carbonate, ethylene sulfite, hexamethyldisilazane or triphenyl phosphite.

7. The high capacity lithium ion battery containing metallic conducting materials according to any one of Claim 1 or 2, wherein the sealing material is self-antiflaming rigid polyvinyl chloride plastics, stainless steel or aluminum-plastic composite film or aluminum shell.

8. The high capacity lithium ion battery containing metallic conducting materials according to any one of Claim 1 or 2, wherein the conducting materials in the positive electrode plate contain an irradiation crosslinking mixture of metallic conducting materials and polyethylene, and the conducting materials in the negative electrode plate contain an irradiation crosslinking mixture of metallic conducting materials and polyethylene.
